# EUROPÄISCHE PATENTSCHRIFT

(11) **EP 1 503 538 B1**
(45) Veröffentlichungstag und Bekanntmachung des Hinweises auf die Patenterteilung: **07.03.2007**
(21) Anmeldenummer: 03090243.1
(22) Anmeldetag: 31.07.2003
(51) Int. Cl.: H04L 12/14, H04Q 3/00, H04Q 7/24, H04L 12/56

(54) **Verfahren zum Ermitteln eines Abrechnungstarifs für eine Datenübertragung**
Method for determining a tariff for a data transmission
Procédé pour la détermination de tarif pour une transmission de données

(43) Veröffentlichungstag der Anmeldung: 02.02.2005
(73) Patentinhaber: SIEMENS AKTIENGESELLSCHAFT, 80333 München (DE)
(72) Erfinder: Kissner, Martin, 16766 Kremmen (DE); Friedrich, Koch, 81929 München (DE); Scheibe, Hagen, 85521 Ottobrunn (DE); Schendel, Jens, 13349 Berlin (DE); Wölkner, Christian, 36404 OECHSEN (DE)

(56) Entgegenhaltungen:
- EP-A- 1 223 737
- EP-A- 1 331 616
- US-A- 5 905 954
- US-B1- 6 311 275
- "Digital cellular telecommunications system (Phase 2+) (GSM); Universal Mobile Telecommunications System (UMTS); Customised Applications for Mobile network Enhanced Logic (CAMEL) Phase 3 - Stage 2 (3GPP TS 23.078 version 4.0.0 Release 4)" ETSI TS 123078 V4.0.0, [Online] 31. März 2001 (2001-03-31), XP002267860 Sophia Antipolis Gefunden im Internet: <URL:http://www.etsi.org> [gefunden am 2004-01-23]

## Beschreibung

Die Erfindung betrifft ein Verfahren zum Ermitteln eines Abrechnungstarifs zum Abrechnen einer paketvermittelten Datenübertragung, wobei sich ein an der Datenübertragung beteiligtes mobiles Kommunikationsendgerät, welches Zugriffsrechte für ein Daten-Mobilfunknetz besitzt, in einem Besucher-Mobilfunknetz befindet.

In Telekommunikationsnetzen werden Telekommunikationsteilnehmern eine Vielzahl von Diensten angeboten. Bei solchen Diensten finden Datenübertragungen statt zwischen einem Dienstanbieter (beispielsweise einem Dienst-Server) und einem Dienstnutzer (beispielsweise einem Kommunikationsendgerät eines Telekommunikationsteilnehmers). Mit Hilfe derartiger Datenübertragungen können beispielsweise Filmdaten, Audiodaten, Nachrichtendaten, Börsenkurs-Daten oder ähnliche geldwerte Informationen von einem dienstanbietenden Dienstrechner zu dem dienstnutzenden Kommunikationsendgerät übertragen werden. In modernen Kommunikationsnetzen (die beispielsweise nach GPRS- oder UMTS-Vorgaben aufgebaut sind) werden die Daten in Form von Datenpaketen zwischen dem Dienstrechner und dem Kommunikationsendgerät übertragen (paketvermittelte Datenübertragung). Mobile Kommunikationsendgeräte (z. B. Mobiltelefone, persönliche digitale Assistenten oder tragbare Computer mit Mobilfunkschnittstelle) können bei der Dienstnutzung naturgemäß an verschiedenen Standorten und damit in verschiedenen Mobilfunknetzen betrieben werden.

Aus der Schrift ETSI TS 123 078 V4.0.0 "Digital cellular telecommunications system (Phase 2+) (GSM)..." ist bekannt, dass zwischen einer "GSM Service Control Function" gsmSCF und einem Heimatregister HLR ein Interface besteht, über welches die "GSM Service Control Function" das Heimatregister abfragt und über welches das Heimatregister die abgefragten Informationen (z.B. den Standort eines Mobiltelefons) an die "GSM Service Control Function" übermittelt.

Aus dem Patent US 6,311,275 B1 ist ein Verfahren bekannt, mit dem in einem Schritt Zugang zu einem Computernetzwerk ermöglicht wird, welches in öffentliche und private Teile unterteilt ist. Zur Ermöglichung des Zugangs zu den privaten Teilen wird ein Service Selection Gateway Server SSG verwendet, der zwischen einem Network Access Server NAS und einem Authentication Authorization and Accounting Server AAA angeordnet ist. Der Service Selection Gateway Server fängt dabei Datenpakete ab, die zwischen dem Network Access Server NAS und dem Authentication Authorization and Accounting Server AAA ausgetauscht werden.

Aus der europäischen Patentanmeldung EP 1 223 737 A1 ist ein Verfahren bekannt, mit dem einem Mobil-Endgerät ermöglicht wird, einen Prepaid-Dienst zu nutzen, wenn das Mobil-Endgerät außerhalb seines Heimatnetzes in einem weiteren Netzwerk roamt. Dazu wird eine Kommunikation zwischen einem Gateway-Knoten des weiteren Netzwerks und einem "Prepaid Data Server" durchgeführt. Wenn ein ausreichendes Guthaben für das Mobil-Endgerät vorhanden ist, dann wird dem Gateway-Knoten ein Schwellwert übermittelt, wodurch eine Datenübertragung mittels des Mobil-Endgeräts ermöglicht wird.

Der Erfindung liegt die Aufgabe zugrunde, ein Verfahren zum Ermitteln eines Abrechnungstarifs zum Abrechnen einer Datenübertragung anzugeben, bei dem der Standort des mobilen Kommunikationsendgerätes berücksichtigt wird.

Diese Aufgabe wird erfindungsgemäß gelöst durch ein Verfahren zum Ermitteln eines Abrechnungstarifs zum Abrechnen einer paketvermittelten Datenübertragung, wobei sich ein an der Datenübertragung beteiligtes mobiles Kommunikationsendgerät mit Zugriffsrechten für ein Daten-Mobilfunknetz in einem Besucher-Mobilfunknetz befindet, bei dem zwischen einem Abrechnungssystem, welches eine Abrechnung der Datenübertragung vornimmt, und einem zentralen Teilnehmerregister des Daten-Mobilfunknetzes eine Datenverbindung aufgebaut wird, über diese Datenverbindung eine den aktuellen Aufenthaltsort des Kommunikationsendgeräts betreffende Ortsinformation zu dem Abrechnungssystem übertragen wird, von dem Abrechnungssystem anhand der Ortsinformation festgestellt wird, dass sich das Kommunikationsendgerät in dem Besucher-Mobilfunknetz befindet, und von dem Abrechnungssystem ein dem Besucher-Mobilfunknetz zugeordneter Abrechnungstarif ermittelt wird. Dabei ist insbesondere vorteilhaft, dass die Ortsinformation von dem zentralen Teilnehmerregister unter Nutzung der Datenverbindung unmittelbar zu dem Abrechnungssystem übertragen wird; dadurch kann die Ortsinformation auf eine einfache Art und Weise zu dem Abrechnungssystem transportiert werden.

Das erfindungsgemäße Verfahren kann so ablaufen, dass über diese Datenverbindung ein das mobile Kommunikationsendgerät eindeutig identifizierendes Kennzeichen von dem Abrechnungssystem zu dem zentralen Teilnehmerregister übertragen wird, und daraufhin von dem zentralen Teilnehmerregister die Ortsinformation zu dem Abrechnungssystem übertragen wird. Dabei ist von Vorteil, dass durch das Abrechnungssystem (durch das Übertragen des Kennzeichens) das zentrale Teilnehmerregister dazu angeregt wird, die Ortsinformation zu übertragen. Das Abrechnungssystem kann also zu genau bestimmten Zeitpunkten die Ortsinformation von dem zentralen Teilnehmerregister abrufen bzw. abfragen.

Es wird als besonders vorteilhaft angesehen, wenn das Kennzeichen lediglich einmal bei Beginn der Datenübertragung von dem Abrechnungssystem zu dem zentralen Teilnehmerregister übertragen wird, und von dem Abrechnungssystem die daraufhin übertragene Ortsinformation für die Dauer der Datenübertragung gespeichert wird. Dabei ist pro Datenübertragung nur eine Übertragung des Kennzeichens und eine Übertragung der Ortsinformation notwendig.

Das erfindungsgemäße Verfahren kann aber auch so ablaufen, dass auf eine Änderung des aktuellen Aufenthaltsorts des Kommunikationsendgeräts hin von dem zentralen Teilnehmerregister selbsttätig die Ortsinformation zu dem Abrechnungssystem übertragen wird. Dabei wird vorteilhafterweise das Abrechnungssystem mit der jeweils aktuellen Ortsinformation versorgt, ohne dass beim Abrechnungssystem aktiv Schritte zur Aktualisierung der Ortsinformation ergriffen werden brauchen.

Dabei kann die Ortsinformation in dem Abrechnungssystem solange gespeichert werden, bis von dem zentralen Teilnehmerregister eine aktualisierte Ortsinformation zu dem Abrechnungssystem übertragen wird. Dadurch ist sichergestellt, dass stets eine Ortsinformation bei dem Abrechnungssystem vorliegt.

Das erfindungsgemäße Verfahren kann so ablaufen, dass bei einem Aufbau eines zur Übertragung der Daten dienenden Datentunnels von dem Kommunikationsendgerät zu einem Netzübergangsknoten des Daten-Mobilfunknetzes das das mobile Kommunikationsendgerät eindeutig identifizierende Kennzeichen von einer dem Kommunikationsendgerät temporär zugeordneten Vermittlungsstelle des Besucher-Mobilfunknetzes zu dem Netzübergangsknoten des Daten-Mobilfunknetzes übertragen wird, und das Kennzeichen von diesem Netzübergangsknoten zu dem Abrechnungssystem übertragen wird. Dadurch kann bereits bei Beginn der Datenübertragung das Kennzeichen zu dem Abrechnungssystem übertragen werden.

Das Verfahren kann so ablaufen, dass verfahrenseinleitend von dem Besucher-Mobilfunknetz eine die Datenübertragung betreffende Anforderungsnachricht des Kommunikationsendgerätes empfangen wird, von dem Besucher-Mobilfunknetz aus dem zentralen Datenspeicher abgefragt wird, für welches Daten-Mobilfunknetz das Kommunikationsendgerät Zugriffsrechte besitzt, und daraufhin der Datentunnel zu dem Netzübergangsknoten dieses Daten-Mobilfunknetzes aufgebaut wird. Dabei wird vorteilhafterweise von dem Besucher-Mobilfunknetz ermittelt, für welches Daten-Mobilfunknetz das Kommunikationsendgerät Zugriffsrechte besitzt und über welches Daten-Mobilfunknetz demzufolge die Datenübertragung realisiert werden kann. Bei einem solchen Daten-Mobilfunknetz, für das das Kommunikationsendgerät Zugriffsrechte besitzt, kann es sich beispielsweise um das Heimatnetz des Kommunikationsendgerätes oder auch um ein Mobilfunknetz handeln, zwischen dessen Betreiber und einem Nutzer des Kommunikationsendgerätes eine entsprechende Vereinbarung geschlossen wurde.

Das Verfahren kann so ablaufen, dass von dem Netzübergangsknoten das Kennzeichen mittels einer Authentisierungsnachricht zu einem Authentisierungsserver des Daten-Mobilfunknetzes übertragen wird, und aufgrund der Authentisierungsnachricht das Kennzeichen zu einem Dienstrechnergateway übertragen wird. Dabei ist vorteilhaft, dass das Kennzeichen mittels einer Authentisierungsnachricht übertragen wird, welche in Daten-Mobilfunknetzen oftmals sowieso zwischen Netzübergangsknoten und Authentisierungsservern übertragen wird. Somit ist für die Übertragung des Kennzeichens keine zusätzliche Nachricht notwendig.

Bei dem erfindungsgemäßen Verfahren kann aufgrund der Authentisierungsnachricht das Kennzeichen zu dem Dienstrechnergateway übertragen werden, indem von dem Netzübergangsknoten das Kennzeichen über das Dienstrechnergateway zu dem Authentisierungsserver übertragen wird, bei der Übertragung von dem Dienstrechnergateway aus der Authentisierungsnachricht das Kennzeichen ausgelesen wird, und das Kennzeichen in dem Dienstrechnergateway gespeichert wird. Bei dieser Ausgestaltungsform des erfindungsgemäßen Verfahrens wird vorteilhafterweise der Authentisierungsserver nicht mit zusätzlichen Aufgaben zur Verarbeitung des Kennzeichens belastet, da das Dienstrechnergateway selbstständig das Kennzeichen aus der Authentisierungsnachricht ausliest und speichert.

Das erfindungsgemäße Verfahren kann so ablaufen, dass von dem Dienstrechnergateway die Datenübertragung überwacht wird, und von dem Dienstrechnergateway ermittelte Überwachungsinformationen und das Kennzeichen zu dem Abrechnungssystem übertragen werden. Dabei wird das Abrechnungssystem von dem Dienstrechnergateway mit den für die Abrechnung verwendbaren Informationen versorgt.

Bei dem erfindungsgemäßen Verfahren kann durch den Netzübergangsknoten ein Benutzername und/oder ein Passwort von dem Kommunikationsendgerät empfangen werden, und daraufhin die Authentisierungsnachricht zu einem Authentisierungsserver übertragen werden, wobei die Authentisierungsnachricht den Benutzernamen und/oder das Passwort enthält. Dabei kann vorteilhafterweise eine in dem Daten-Mobilfunknetz ggf. sowieso notwendige Authentisierung der Datenübertragung mit der Übertragung des Kennzeichens verbunden werden.

Das erfindungsgemäße Verfahren kann aber auch so ablaufen, dass durch den Netzübergangsknoten ein lediglich als Platzhalter dienender Benutzername und/oder ein lediglich als Platzhalter dienendes Passwort von dem Kommunikationsendgerät empfangen wird. Diese Ausgestaltung des erfindungsgemäßen Verfahrens ermöglicht eine Übertragung des Kennzeichens mittels der Authentisierungsnachricht zu dem Dienstrechnergateway auch dann, wenn keine Authentisierung der Datenübertragung notwendig ist. Das Verwenden eines lediglich als Platzhalter (Dummy) dienenden Benutzernamens und/oder Passwortes ermöglicht es dem Netzübergangsknoten, eine formal vollständige Authentisierungsnachricht zu erstellen und zu übertragen.

Bei dem erfindungsgemäßen Verfahren kann als Daten-Mobilfunknetz das Heimat-Mobilfunknetz des Kommunikationsendgerätes verwendet werden.

Bei dem erfindungsgemäßen Verfahren kann von dem Abrechnungssystem die Ortsinformation verglichen werden mit gespeicherten Ortsinformationen, welche verschiedenen Besucher-Mobilfunknetzen zugehörig sind, und bei einer Übereinstimmung der Ortsinformation mit einer der gespeicherten Ortsinformationen kann von dem Abrechnungssystem festgestellt werden, dass sich das Kommunikationsendgerät in dem zugehörigen Besucher-Mobilfunknetz befindet. Hierbei ist durch einen einfachen Vergleich der Ortsinformation mit den gespeicherten Ortsinformationen eine Ermittlung des Besucher-Mobilfunknetzes möglich, in dem sich das mobile Kommunikationsendgerät aktuell befindet.

Bei dem Verfahren kann erfindungsgemäß als Ortsinformation eine Besucherregisteradresse zu dem Netzübergangsknoten übertragen wird, wobei die Besucherregisteradresse ein dem Kommunikationsendgerät temporär zugeordnetes Besucherregister des Besucher-Mobilfunknetzes eindeutig identifiziert. Hierbei wird vorteilhafterweise eine im zentralen Teilnehmerregister sowieso vorhandene Information (Besucherregisteradresse) als Ortsinformation genutzt, wodurch sich ein besonders einfach zu realisierendes Verfahren ergibt.

Das erfindungsgemäße Verfahren kann so ablaufen, dass von der dem Kommunikationsendgerät temporär zugeordneten Vermittlungsstelle eine Kenngröße der Datenübertragung zu dem Abrechnungssystem übertragen wird und diese Kenngröße bei der Ermittlung des Abrechnungstarifs herangezogen wird. Dies ermöglicht es vorteilhafterweise, verschiedene Abrechnungstarife zu nutzen, welche über quantitative Merkmale (Kenngrößen) der Datenübertragung zugeordnet werden.

Als Kenngröße der Datenübertragung kann eine Bandbreitenkenngröße der Luftschnittstelle des Kommunikationsendgerätes zu dem Abrechnungssystem übertragen werden.

Als Abrechnungssystem kann ein Dienstesteuerungspunkt eines Intelligenten Netzes verwendet werden.

Bei dem erfindungsgemäßen Verfahren kann über die Datenverbindung die den aktuellen Aufenthaltsort des Kommunikationsendgeräts betreffende Ortsinformation mittels der Nachricht AnyTimeInterrogationResult zu dem Abrechnungssystem übertragen werden.

Das Verfahren kann auch so ablaufen, dass über die Datenverbindung das das mobile Kommunikationsendgerät eindeutig identifizierende Kennzeichen mittels der Nachricht AnyTimeInterrogation von dem Abrechnungssystem zu dem zentralen Teilnehmerregister übertragen wird. Bei den beiden letztgenannten Ausführungsformen ist vorteilhaft, dass für die Übertragung der Ortsinformation bzw. für die Übertragung des Kennzeichens Nachrichten verwendet werden, welche es ermöglichen, dass erfindungsgemäße Verfahren auch bei in bestehenden Telekommunikationsnetzen bereits vorhandenen zentralen Teilnehmerregistern anzuwenden. Dadurch läßt sich das Verfahren schnell und mit geringem Aufwand auch in bereits bestehenden Telefonnetzen einsetzen.

Zur weiteren Erläuterung der Erfindung ist in
Figur 1 ein Ausführungsbeispiel von an einer Datenübertragung beteiligten Telekommunikationsnetzen zusammen mit Verfahrensschritten des erfindungsgemäßen Verfahrens und in
Figur 2 ein Ausführungsbeispiel von Nachrichtenübertragungen zwischen einem Netzübergangsknoten und einem Authentisierungsserver dargestellt.

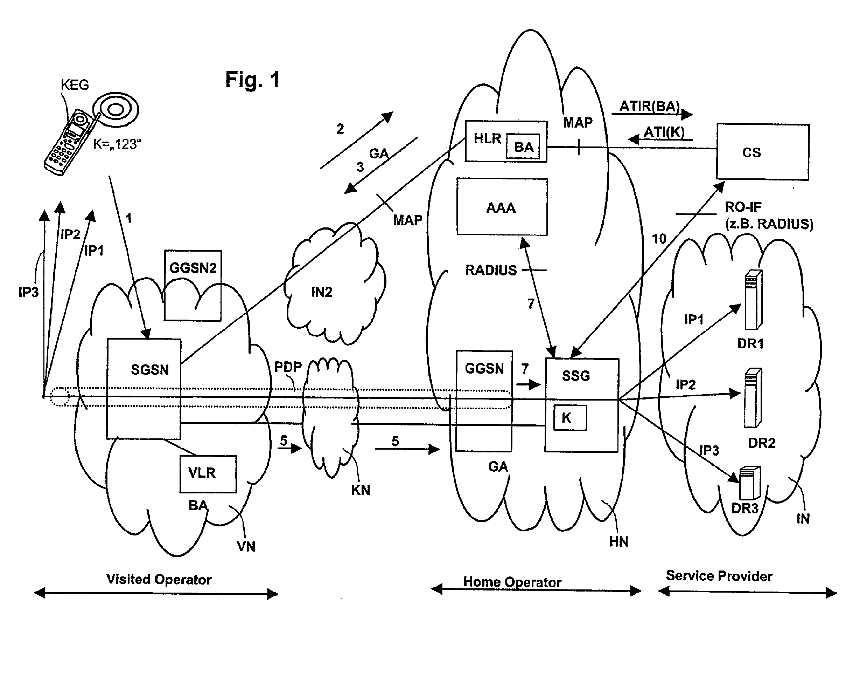

In Figur 1 ist ein mobiles Kommunikationsendgerät KEG in Form eines Mobiltelefons mit der Mobilfunkrufnummer "123" dargestellt, wobei die Mobilfunkrufnummer "123" ein Kennzeichen K darstellt, welches das mobile Kommunikationsendgerät KEG eindeutig identifiziert. Das Kommunikationsendgerät KEG befindet sich aktuell im Funkbereich eines Besucher-Mobilfunknetzes VN und ist mit diesem verbunden. Das Besucher-Mobilfunknetz VN unterliegt der Kontrolle eines Besuchernetz-Operators ("visited operator"). Mittels des Kommunikationsendgerätes KEG soll ein Dienst eines Dienstrechners DR2 in Anspruch genommen werden, wobei der Dienstrechner DR2 im Internet IN angeordnet ist. Der Dienstrechner DR2 unterliegt der Kontrolle eines Dienste-Anbieters ("service provider"). Der Zugriff des Kommunikationsendgerätes KEG auf den Dienstrechner DR2 des Internets IN erfolgt über das Besucher-Mobilfunknetz VN, über ein weiteres Telekommunikationsnetz KN und über ein Daten-Mobilfunknetz HN. Bei dem Daten-Mobilfunknetz HN handelt es sich allgemein um ein Mobilfunknetz, für welches das Kommunikationsendgerät KEG Zugriffsrechte besitzt und über welches demzufolge die Dienstnutzung bzw. der Zugriff auf die Daten des Dienstrechners DR2 erfolgt.

Bei dieser Dienstnutzung werden zwischen dem Kommunikationsendgerät KEG und dem Dienstrechner DR2 Datenpakete IP2 ausgetauscht. Durch die Übertragung solcher nach dem Internet-Protokoll (IP) aufgebauten IP-Datenpakete (paketvermittelte Datenübertragung) wird eine bidirektionale Datenübertragung zwischen dem Kommunikationsendgerät KEG und dem Daten-Mobilfunknetz HN bzw. dem Dienstrechner DR2 realisiert.

Von dem Kommunikationsendgerät KEG kann auch gleichzeitig ein weiterer Dienst eines weiteren Dienstrechners DR1 und/oder ein dritter Dienst eines dritten Dienstrechners DR3 genutzt werden. Dazu werden zwischen dem Kommunikationsendgerät KEG und dem weiteren Dienstrechner DR1 Datenpakete IP1 bidirektional ausgetauscht. Ebenso werden zwischen dem Kommunikationsendgerät KEG und dem dritten Dienstrechner DR3 Datenpakete IP3 bidirektional ausgetauscht.

Dienste, auf die das mobile Kommunikationsendgerät mittels Datenübertragungen von Datenpaketen zugreift, werden auch als "IP-Services" bezeichnet. Solche Dienste werden dem Nutzer des Kommunikationsendgerätes KEG von seinem Heimat-Mobilfunknetznetz HN (mobile network operators core network) zur Verfügung gestellt. Dies geschieht im Ausführungsbeispiel dadurch, dass das Heimatnetz HN einen Zugang zu dem Dienstrechner DR2 des Internets vermittelt. Im Ausführungsbeispiel unterliegt das Daten-Mobilfunknetz HN als Heimat-Mobilfunknetz der Kontrolle eines Heimatnetz-Operators ("home operator"). Bei einem anderen Ausführungsbeispiel kann der Dienstrechner DR2 auch innerhalb des Heimatnetzes HN angeordnet sein.

In einem anderen Ausführungsbeispiel kann auch der Fall eintreten, dass zwischen einem Benutzer des Kommunikationsendgerätes KEG und einem Netzbetreiber eines dritten Mobilfunknetzes (welches sich von dem Heimat-Mobilfunknetz des Kommunikationsendgerätes KEG unterscheidet) ein Vertrag abgeschlossen wird, auf dessen Grundlage das Kommunikationsendgerät KEG auf dieses dritte Mobilfunknetz zugreifen kann, um über dieses dritte Mobilfunknetz Dienste zu nutzen. In diesem Fall werden in dem Kommunikationsendgerät KEG sogenannte "APN-Einstellungen" (APN = Access Point Name) so verändert, dass das Kommunikationsendgerät KEG auf einen Netzübergangsknoten dieses dritten Mobilfunknetzes zugreifen kann. In diesem Fall verhält sich bezüglich der Dienstnutzung dieses dritte Mobilfunknetz ähnlich wie das Heimatnetz des Kommunikationsendgerätes; das dritte Mobilfunknetz ermöglicht nämlich dem Kommunikationsendgerät KEG die Datenübertragung mit dem jeweiligen Dienstrechner.

Das Mobilfunknetz, auf das der roamende Mobilfunkteilnehmer KEG zugreifen kann und für das er Zugriffsrechte besitzt, wird im Rahmen dieser Beschreibung als Daten-Mobilfunknetz HN bezeichnet. Bei diesem Daten-Mobilfunknetz kann es sich also sowohl um das Heimat-Mobilfunknetz des Kommunikationsendgerätes handeln als auch um ein drittes Mobilfunknetz, auf das das Kommunikationsendgerät zum Zwecke der Dienstnutzung zugreifen kann.

Mit dem Daten-Mobilfunknetz HN verbunden ist ein Abrechnungssystem CS, mit dem die Datenübertragung abgerechnet wird. Dadurch kann diese Datenübertragung einem Nutzer des Kommunikationsendgerätes KEG in Rechnung gestellt werden. Zu diesem Zweck werden bei dem Abrechnungssystem CS verschiedene Abrechnungstarife vorrätig gehalten, welche entsprechend der Art der jeweiligen Datenübertragung anzuwenden sind. In dem Abrechnungssystem CS ist z.B. ein Abrechnungstarif gespeichert, welcher dann anzuwenden ist, wenn sich das mobile Kommunikationsendgerät KEG im Einflussbereich des Besucher-Mobilfunknetzes VN befindet (d.h. in diesem "roamt"). Für weitere in der Figur nicht dargestellte Besucher-Mobilfunknetze (in deren Einflussbereich das mobile Kommunikationsendgerät ebenfalls gelangen könnte und von wo aus das Kommunikationsendgerät ebenfalls Datenübertragungen zu dem Daten-Mobilfunknetz aufbauen könnte) sind in dem Abrechnungssystem CS ebenfalls zugeordnete Abrechnungstarife gespeichert. Solche Abrechnungstarife enthalten beispielsweise auf die jeweilige Datenübertragung anzuwendende Preisdaten (z. B. eine Minute Datenübertragung kostet 0,30 Euro, 10 KByte übertragene Datenmenge kostet 1 Euro, ein komplett mittels Datenpaketen übertragener Datensatz kostet 3 Euro).

Im Ausführungsbeispiel wird als Abrechnungssystem ein Dienststeuerungspunkt (SCP = Service Control Point) verwendet; das Daten-Mobilfunknetz HN weist die Struktur eines Intelligenten Netzes auf.

Im Folgenden wird erläutert, wie in dem Abrechnungssystem CS der aktuell anzuwendende Abrechnungstarif ermittelt wird. Wenn zum Zweck der Dienstnutzung von dem mobilen Kommunikationsendgerät KEG aus auf den Dienstrechner DR2 zugegriffen und eine entsprechende Datenübertragung zwischen dem Kommunikationsendgerät und dem Dienstrechner DR2 realisiert werden soll, dann sendet das Kommunikationsendgerät KEG eine die Datenübertragung betreffende Anforderungsnachricht an das Besucher-Mobilfunknetz VN (Pfeil 1). Diese Anforderungsnachricht gelangt zu einer Vermittlungsstelle SGSN (SGSN = Serving GPRS Support Node) des Besucher-Mobilfunknetzes VN. Dieser Vermittlungsstelle ist ein Besucherregister VLR zugeordnet. Oftmals sind das Besucherregister und die Vermittlungsstelle in einer Einheit realisiert. Die Vermittlungsstelle SGSN fragt daraufhin aus einem zentralen Datenspeicher in Form eines Heimatregisters HLR ab, für welches Daten-Mobilfunknetz das Kommunikationsendgerät KEG Zugriffsrechte besitzt (Pfeil 2). Diese Abfrage erfolgt im Ausführungsbeispiel über ein weiteres Internet IN2 unter Nutzung von MAP-Nachrichten. In dem Heimatregister HLR sind für jeden Teilnehmer derartige Informationen in Form eines Datensatzes "GPRS Subscription Data" gespeichert (in GPRS- oder UMTS-Mobilfunknetzen kann als zentrales Datenspeicher auch ein Speicherknoten HSS verwendet werden). Das Heimatregister HLR überträgt mittels der MAP-Nachricht "Insert Subscriber" eine Gateway-Adresse GA eines Netzübergangsknotens GGSN des Daten-Mobilfunknetzes HN an die Vermittlungsstelle SGSN (Pfeil 3). Daraufhin wird ein Datentunnel PDP in Form eines sog. PDP-Kontexts (PDP = Packet Data Protocol) zur Realisierung der Datenübertragung zwischen dem Kommunikationsendgerät und dem Netzübergangsknoten GGSN des Daten-Mobilfunknetzes aufgebaut. Während des Aufbaus des Datentunnels PDP sendet das mobile Kommunikationsendgerät einen Benutzernamen und/oder ein Passwort zu dem Netzübergangsknoten GGSN. Bei diesem Benutzernamen und/oder Passwort kann es sich um einen Benutzernamen und/oder ein Passwort handeln, welches zur Authentisierung der Datenübertragung vorgesehen ist. Alternativ kann es sich aber auch um einen lediglich als Platzhalter (Dummy) dienenden Benutzernamen und/oder Passwort handeln, dessen Inhalt beliebig ist und keinerlei Bedeutung hat. In diesem Fall dient ein derart ausgestalteter Benutzername und/oder Passwort vorteilhafterweise dazu, dem Netzübergangsknoten GGSN auch dann die Möglichkeit zu geben, eine Authentisierungsnachricht zu erstellen, wenn eine Authentisierung unter Sicherheitsaspekten betrachtet überhaupt nicht notwendig ist.

Bei dem Aufbau des Datentunnels PDP wird ebenfalls das das mobile Kommunikationsendgerät KEG eindeutig identifizierende Kennzeichen K in Form der Mobilrufnummer "123" zu dem Netzübergangsknoten GGSN übertragen. Anstelle der Mobilrufnummer (MSISDN = mobile station ISDN number) können auch andere dem Kommunikationsendgerät KEG bzw. dessen aktuellem Nutzer eindeutig zuordenbare Zeichenketten als Kennzeichen K verwendet werden, z.B. die internationale Mobilfunk-Teilnehmerkennung IMSI (IMSI = international mobile subscriber identity). Die Übertragung des Kennzeichens K und des Benutzernamens und/oder des Passwortes sind durch die Pfeile 5 symbolisiert. Diese Daten werden im Ausführungsbeispiel über das weitere Telekommunikationsnetz KN zu dem Netzübergangsknoten GGSN übertragen. Bei dem weiteren Telekommunikationsnetz KN handelt es sich im Ausführungsbeispiel um einen sog. Inter-PLMN-Backbone.

Nachdem von dem Netzübergangsknoten GGSN der Benutzername, das Passwort und das Kennzeichen empfangen wurde, wird von dem Netzübergangsknoten GGSN eine Authentisierungsnachricht erstellt, welche den Benutzernamen, das Passwort und das Kennzeichen K enthält. Diese Authentisierungsnachricht wird von dem Netzübergangsknoten GGSN über ein Dienstrechnergateway SSG zu einem Authentisierungsserver AAA übertragen. Als eine derartige Authentisierungsnachricht dient eine nach dem RADIUS-Protokoll aufgebaute Nachricht "Access Request" (Pfeil 7). Das Dienstrechnergateway SSG ist derjenige Netzknoten des Daten-Mobilfunknetzes HN, welcher eine Verbindung zu dem den jeweiligen Dienst anbietenden Dienstrechner (im Ausführungsbeispiel zu dem Dienstrechner DR2 des Internets) aufbauen kann.

Das Dienstrechnergateway SSG liest aus der Authentisierungsnachricht 7 das Kennzeichen K aus und speichert dieses für die Dauer der Datenübertragung zwischen. (In einer alternativen Ausführungsform wird das Kennzeichen K mit der Authentisierungsnachricht zu dem Authentisierungsserver AAA übertragen, von diesem Authentisierungsserver AAA aus der Authentisierungsnachricht ausgelesen und daraufhin von dem Authentisierungsserver AAA zu dem Dienstrechnergateway SSG übermittelt. Daraufhin wird das Kennzeichen K von dem Dienstrechnergateway SSG zwischengespeichert.)

Das Dienstrechnergateway SSG überwacht nun die Datenübertragung zwischen dem Kommunikationsendgerät KEG und dem Dienstrechner DR2; beispielsweise ermittelt das Dienstrechnergateway SSG die Anzahl und/oder die Datenmenge der Datenpakete, welche zwischen dem Kommunikationsendgerät KEG und dem Dienstrecher DR2 ausgetauscht werden. Das Dienstrechnergateway SSG sendet die so ermittelten Informationen als Überwachungsinformationen gemeinsam mit dem gespeicherten Kennzeichen K zu dem Abrechnungssystem CS. Derartige Überwachungsinformationen können beispielsweise mittels nach dem RADIUS-Protokoll aufgebauten Abrechnungsnachrichten "Accounting Start" und "Accounting Stop" übertragen werden (Pfeil 10). Diese Nachrichten werden zu Beginn bzw. zum Ende der abzurechnenden Datenübertragung von dem Dienstrechnergateway SSG zu dem Abrechnungssystem CS übertragen. Dabei findet die Datenübertragung zwischen dem Dienstrechnergateway SSG und dem Abrechnungssystem CS über das an sich bekannte "RO-Interface" RO-IF statt; auf diese Weise wird eine Abrechnung der Datenübertragungen der aktuellen "session" vorbereitet.

Daraufhin wird zwischen dem Abrechnungssystem CS und dem zentralen Teilnehmerregister HLR des Daten-Mobilfunknetzes HN eine Datenverbindung aufgebaut. Mittels einer nach dem Datenübertragungsprotokoll MAP aufgebauten Nachricht ATI (ATI = AnyTimeInterrogation) wird über diese Datenverbindung das Kennzeichen K von dem Abrechnungssystem CS zu dem zentralen Teilnehmerregister HLR übertragen.

In dem zentralen Teilnehmerregister HLR sind bekanntermaßen Ortsinformationen über das mobile Kommunikationsendgerät KEG gespeichert. Bei Ortsveränderungen des mobilen Kommunikationsendgeräts KEG werden diese Ortsinformationen aktualisiert (location update). In dem Heimatregister HLR ist als eine solche Ortsinformation eine Besucherregisteradresse BA gespeichert, welche das Besucherregister VLR eindeutig identifiziert, in dessen Einflußbereich sich das Kommunikationsendgerät KEG aktuell befindet. Diese Besucherregisteradresse BA stellt also eine Ortsinformation für das Kommunikationsendgerät KEG dar, weil sich das mobile Kommunikationsendgerät KEG aktuell in dem örtlichen Einflussbereich dieses Besucherregisters VLR befindet; das Besucherregister VLR ist das dem Kommunikationsendgerät temporär zugeordnete Besucherregister des Besucher-Mobilfunknetzes. Solche Besucherregister werden oftmals gemeinsam mit Vermittlungsstellen in einer Einheit realisiert.

In dem zentralen Teilnehmerregister HLR wird mittels des Kennzeichens K die Besucherregisteradresse BA des mobilen Kommunikationsendgeräts ermittelt. Diese Ortsinformation in Form der Besucherregisteradresse BA wird daraufhin mit der MAP-Nachricht ATIR (ATIR = AnyTimeInterrogationResponse) über die Datenverbindung zu dem Abrechnungssystem CS übertragen. Als Ortsinformationen können aber über die Datenverbindung auch andere Informationen von dem Heimatregister HLR zu dem Abrechnungssystem CS übertragen werden, z.B. ein Ländercode des Staates, in dem sich das Kommunikationsendgerät KEG aktuell befindet oder eine Kennung (Cell-ID) der Funkzelle des Besucher-Mobilfunknetzes VN, in deren Funkabdeckungsbereich sich das Kommunikationsendgerät KEG aktuell befindet. Diese Informationen können z.B. mittels der MAP-Nachricht "Provide Subscriber Information" durch das Teilnehmerregister HLR von dem Besucherregister VLR angefordert werden.

Von dem Abrechnungssystem CS wird nun anhand der Ortsinformation BA festgestellt, dass sich das Kommunikationsendgerät KEG in dem Besucher-Mobilfunknetz VN befindet. Dazu wird von dem Abrechnungssystem die Ortsinformation BA verglichen mit gespeicherten Ortsinformationen, welche verschiedenen Besucher-Mobilfunknetzen zugehörig sind. Im Ausführungsbeispiel ist in dem Abrechnungssystem CS abgespeichert, dass die Besucherregisteradresse BA dem Besucher-Mobilfunknetz VN zugehörig ist. Aufgrund dieser abgespeicherten Ortsinformation erkennt das Abrechnungssystem CS, dass sich das Kommunikationsendgerät KEG im Einflussbereich des Besucher-Mobilfunknetzes VN befindet. Daraufhin wird von dem Abrechnungssystem CS der dem Besucher-Mobilfunknetz VN zugeordnete Abrechnungstarif ermittelt und für die darauffolgende Abrechnung der Datenübertragung herangezogen. Dieser Abrechnungstarif kann beispielsweise höhere Abrechnungsgebühren aufweisen als ein Abrechnungstarif, der angewandt würde, wenn sich das Kommunikationsendgerät KEG in dem Funkabdeckungsbereich des Daten-Mobilfunknetzes HN befinden würde bzw. direkt mit diesem verbunden wäre (d. h. wenn das Kommunikationsendgerät KEG nicht "roamt", sondern sich beispielsweise im Einflussbereich seines Heimatnetzes befindet).

Bei jedem Senden einer Abrechnungsnachricht 10 fügt das Dienstrechnergateway SSG das Kennzeichen K in die Abrechnungsnachricht ein, so dass das Abrechnungssystem CS nach jedem Erhalt einer Abrechnungsnachricht 10 von dem Heimatregister HLR aktualisierte Ortsinformationen BA abfragen kann. In einer besonders vorteilhaften Ausführungsform wird das Kennzeichen jedoch lediglich einmal bei Beginn der Datenübertragung von dem Abrechnungssystem CS zu dem zentralen Teilnehmerregister HLR übertragen. Die von dem Heimatregister daraufhin zu dem Abrechnungssystem übertragene Ortsinformation BA wird für die Dauer der Datenübertragung in dem Abrechnungssystem gespeichert und zur Ermittelung des Abrechnungstarifs herangezogen. Dabei wird vorteilhafterweise erreicht, dass durch die Übertragung der Ortsinformation zu dem Abrechnungssystem nur geringe zusätzliche Netzbelastungen auftreten.

In einer alternativen Ausführungsform des Verfahrens wird von dem zentralen Teilnehmerregister HLR bei jeder auftretenden Änderung des aktuellen Aufenthaltsortes des Kommunikationsendgerät KEG (die mit einer Veränderung der in dem Teilnehmerregister HLR gespeicherten Teilnehmerdaten verbunden ist) selbsttätig die aktuelle Ortsinformation zu dem Abrechnungssystem übertragen; dies stellt ein sog. push-Verfahren dar. Diese Übertragung der Ortsinformation über die Datenverbindung kann bei dem erfindungsgemäßen Verfahren z.B. mittels der MAP-Nachricht "Mobility Management Event Notification" erfolgen. Die Ortsinformation wird in dem Abrechnungssystem CS solange gespeichert und zur Ermittelung des Abrechnungstarifs herangezogen, bis von dem zentralen Teilnehmerregister HLR eine aktualisierte Ortsinformation BA zu dem Abrechnungssystem CS übertragen wird.

Alternativ kann von der dem Kommunikationsendgerät temporär zugeordneten Vermittlungsstelle SGSN neben dem Kennzeichen K beim Aufbau des Datentunnels PDP zusätzlich eine Kenngröße der Datenübertragung zu dem Daten-Mobilfunknetz HN und zu dem Abrechnungssystem CS übertragen werden. Als ein solche Kenngröße kann beispielsweise eine Information über die Bandbreite der Luftschnittstelle des Mobiltelefons KEG übertragen werden. Dies ist insbesondere bei UMTS-Mobilfunknetzen vorteilhaft, da in diesen Netzen abhängig von der Richtung der übertragenen Daten mit verschiedenen Datenübertragungsraten (Bandbreiten) gearbeitet wird. Auch diese zusätzliche Kenngröße der Datenübertragung kann von dem Abrechnungssystem CS bei der Ermittlung des Abrechnungstarifs herangezogen werden.

In einer weiteren alternativen Ausgestaltungsform des Verfahrens kann das Dienstrechnergateway SSG sogenannte "charging tickets" erzeugen, die dann zu einem Abrechnungssystem in Form eines Gebührennacherhebungssystems (Postpaid-System) übertragen werden. Bei der Erzeugung dieser Tickets verwendet das Dienstrechnergateway SSG einen Abrechnungstarif. Die zur Ermittlung des Abrechnungstarifs notwendige Ortsinformation kann das Dienstrechnergateway SSG auf eine Weise von dem zentralen Teilnehmerergebnis HLR erhalten, welche ähnlich ist zu der Weise, wie bei dem vorstehend beschriebenen Verfahren das Abrechnungssystem CS die Ortsinformation von dem zentralen Teilnehmerregister HLR erhalten hat.

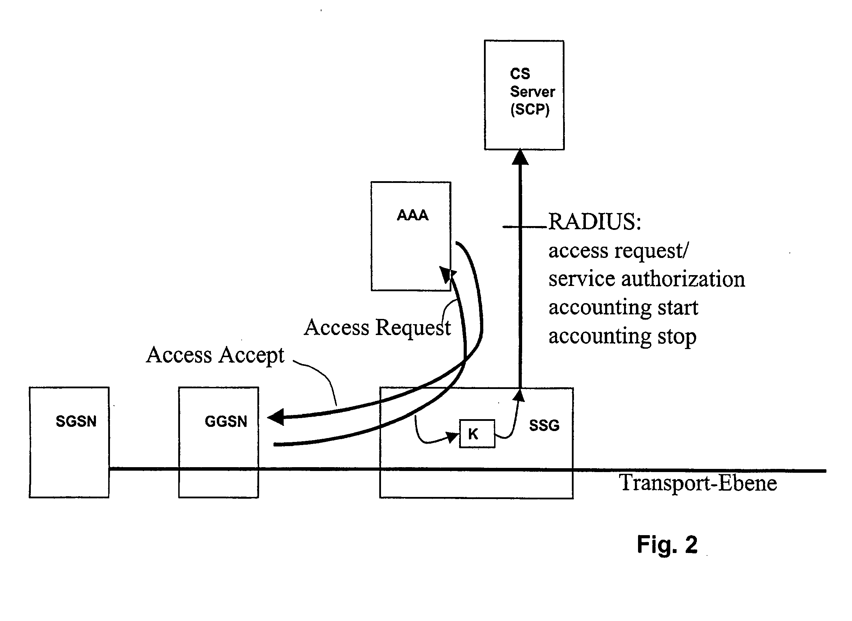

In Figur 2 ist anschaulich dargestellt, wie von dem Netzübergangsknoten GGSN mittels der Authentisierungsnachricht "Access Request" das Kennzeichen K zu dem Authentisierungsserver AAA übertragen wird. Das Dienstrechnergateway SSG liest das Kennzeichen K aus der Authentisierungsnachricht aus und speichert dieses zwischen, um es später gemeinsam mit den Überwachungsinformationen im Rahmen der nach RADIUS-Vorgaben ausgeführten Aktionen "Access Request" und "Service Authorization" an das Abrechnungssystem CS zu übermitteln. Der Authentisierungsserver AAA antwortet auf die Authentisierungsnachricht "AAA Request" mit der Nachricht "Access Accept".

Mit dem beschriebenen Verfahren kann ein Abrechnungstarif zum Abrechnen einer IP-Paket-orientierten bzw. paketvermittelten Datenübertragung ermittelt werden, wobei berücksichtigt wird, ob sich das Mobilkommunikationsendgerät in einem Besucher-Mobilfunknetz befindet (roamt).

Bei diesem Verfahren werden vorteilhafterweise keinerlei Funktionalitäten des CAMEL3-Standards verwendet. Dies ist ein beträchtlicher Vorteil, da viele Netzwerkbetreiber derzeit die Funktionalitäten von CAMEL3 aus Kosten- und Aufwandsgründen nicht in ihren Mobilfunknetze anbieten bzw. nutzen. Mit der beschriebenen Lösung kann auch bei Mobilfunknetzen, die keine CAMEL-Funktionalitäten aufweisen, erkannt werden, dass sich ein mobiles Kommunikationsendgerät bei der Nutzung von paketbasierten Diensten in einem Besucher-Mobilfunknetz befindet; es kann ein diesem Besucher-Mobilfunknetz zugeordneter Abrechnungstarif für die Abrechnung der Dienstnutzung bzw. der zugehörigen Datenübertragung ermittelt werden. Dieses Ermitteln des Abrechnungstarifs kann in Echtzeit ausgeführt werden, so dass die folgende Abrechnung beispielsweise auch über vorausbezahlte Guthaben (Prepaid-Verfahren) erfolgen kann. Das beschriebene Verfahren kann dabei vorteilhafterweise mittels der Übertragung von nach RADIUS-Vorgaben aufgebauten Nachrichten ausgeführt werden.

### Verwendete Abkürzungen:

- CAMEL: Customised Applications for Mobile network Enhanced Logic
- GGSN: Gateway GPRS Support Node
- GPRS: General Packet Radio Service
- HLR: Home Location Register
- HSS: Home Subscriber Server
- MAP: Mobile Application Part
- PLMN: Public Land Mobile Network
- PDP: Packet Data Protocol, z.B. IP-Protocol
- SGSN: Serving GPRS Support Node
- SSG: Service Selection Gateway
- UMTS: Universal Mobile Telecommunication System

## Patentansprüche

1. Verfahren zum Ermitteln eines Abrechnungstarifs zum Abrechnen einer paketvermittelten Datenübertragung (IP2), wobei sich ein an der Datenübertragung beteiligtes mobiles Kommunikationsendgerät (KEG) mit Zugriffsrechten für ein Daten-Mobilfunknetz (HN) in einem Besucher-Mobilfunknetz (VN) befindet, bei dem
- zwischen einem Abrechnungssystem (CS), welches eine Abrechnung der Datenübertragung vornimmt, und einem zentralen Teilnehmerregister (HLR) des Daten-Mobilfunknetzes (HN) eine Datenverbindung aufgebaut wird,
- über diese Datenverbindung eine den aktuellen Aufenthaltsort des Kommunikationsendgeräts (KEG) betreffende Ortsinformation (BA) zu dem Abrechnungssystem (CS) übertragen wird,
- von dem Abrechnungssystem (CS) anhand der Ortsinformation (BA) festgestellt wird, dass sich das Kommunikationsendgerät (KEG) in dem Besucher-Mobilfunknetz (VN) befindet, und
- daraufhin von dem Abrechnungssystem (CS) ein dem Besucher-Mobilfunknetz (VN) zugeordneter Abrechnungstarif ermittelt wird.

2. Verfahren nach Anspruch 1,
**dadurch gekennzeichnet, dass**
- über diese Datenverbindung ein das mobile Kommunikationsendgerät (KEG) eindeutig identifizierendes Kennzeichen (K) von dem Abrechnungssystem (CS) zu dem zentralen Teilnehmerregister (HLR) übertragen wird, und
- daraufhin von dem zentralen Teilnehmerregister (HLR) die Ortsinformation (BA) zu dem Abrechnungssystem (CS) übertragen wird.

3. Verfahren nach Anspruch 2,
**dadurch gekennzeichnet, dass**
- das Kennzeichen (K) lediglich einmal bei Beginn der Datenübertragung von dem Abrechnungssystem (CS) zu dem zentralen Teilnehmerregister (HLR) übertragen wird, und
- von dem Abrechnungssystem (CS) die daraufhin übertragene Ortsinformation (BA) für die Dauer der Datenübertragung gespeichert wird.

4. Verfahren nach Anspruch 1,
**dadurch gekennzeichnet, dass**
- auf eine Änderung des aktuellen Aufenthaltsorts des Kommunikationsendgeräts (KEG) hin von dem zentralen Teilnehmerregister (HLR) selbsttätig die Ortsinformation (BA) zu dem Abrechnungssystem (CS) übertragen wird.

5. Verfahren nach Anspruch 4,
**dadurch gekennzeichnet, dass**
- die Ortsinformation (BA) in dem Abrechnungssystem (CS) solange gespeichert wird, bis von dem zentralen Teilnehmerregister (HLR) eine aktualisierte Ortsinformation zu dem Abrechnungssystem (CS) übertragen wird.

6. Verfahren nach einem der Ansprüche 2 bis 5,
**dadurch gekennzeichnet, dass**
- bei einem Aufbau eines zur Übertragung der Daten dienenden Datentunnels (PDP) von dem Kommunikationsendgerät (KEG) zu einem Netzübergangsknoten (GGSN) des Daten-Mobilfunknetzes (HN) das Kennzeichen (K) von einer dem Kommunikationsendgerät (KEG) temporär zugeordneten Vermittlungsstelle (SSGN) des Besucher-Mobilfunknetzes (VN) zu dem Netzübergangsknoten (GGSN) des Daten-Mobilfunknetzes (HN) übertragen wird, und
- das Kennzeichen (K) von diesem Netzübergangsknoten (GGSN) zu dem Abrechnungssystem (CS) übertragen wird.

7. Verfahren nach Anspruch 6,
**dadurch gekennzeichnet, dass**
- verfahrenseinleitend von dem Besucher-Mobilfunknetz (VN) eine die Datenübertragung betreffende Anforderungsnachricht (1) des Kommunikationsendgerätes (KEG) empfangen wird,
- von dem Besucher-Mobilfunknetz (VN) aus dem zentralen Datenspeicher (HLR) abgefragt wird, für welches Daten-Mobilfunknetz das Kommunikationsendgerät (KEG) Zugriffsrechte besitzt, und
- daraufhin der Datentunnel (PDP) zu dem Netzübergangsknoten (GGSN) dieses Daten-Mobilfunknetzes (HN) aufgebaut wird.

8. Verfahren nach Anspruch 6 oder 7,
**dadurch gekennzeichnet, dass**
- von dem Netzübergangsknoten (GGSN) das Kennzeichen mittels einer Authentisierungsnachricht (7) zu einem Authentisierungsserver (AAA) des Daten-Mobilfunknetzes (HN) übertragen wird, und
- aufgrund der Authentisierungsnachricht das Kennzeichen (K) zu einem Dienstrechnergateway (SSG) übertragen wird.

9. Verfahren nach Anspruch 8,
**dadurch gekennzeichnet, dass**
- von dem Netzübergangsknoten (GGSN) das Kennzeichen über das Dienstrechnergateway (SSG) zu dem Authentisierungsserver (AAA) übertragen wird,
- bei der Übertragung von dem Dienstrechnergateway (SSG) aus der Authentisierungsnachricht (7) das Kennzeichen (K) ausgelesen wird, und
- das Kennzeichen (K) in dem Dienstrechnergateway (SSG) gespeichert wird.

10. Verfahren nach Anspruch 8 oder 9,
**dadurch gekennzeichnet, dass**
- von dem Dienstrechnergateway (SSG) die Datenübertragung (IP2) überwacht wird, und
- von dem Dienstrechnergateway (SSG) ermittelte Überwachungsinformationen und das Kennzeichen (K) zu dem Abrechnungssystem (CS) übertragen (10) werden.

11. Verfahren nach einem der Ansprüche 8 bis 10,
**dadurch gekennzeichnet, dass**
- durch den Netzübergangsknoten (GGSN) ein Benutzername und/oder ein Passwort von dem Kommunikationsendgerät (KEG) empfangen wird, und
- daraufhin die Authentisierungsnachricht (7) zu dem Authentisierungsserver (AAA) übertragen wird, wobei die Authentisierungsnachricht (7) den Benutzernamen und/oder das Passwort enthält.

12. Verfahren nach Anspruch 11,
**dadurch gekennzeichnet, dass**
- durch den Netzübergangsknoten (GGSN) ein lediglich als Platzhalter dienender Benutzername und/oder ein lediglich als Platzhalter dienendes Passwort von dem Kommunikationsendgerät (KEG) empfangen wird.

13. Verfahren nach einem der vorhergehenden Ansprüche,
**dadurch gekennzeichnet, dass**
- als Daten-Mobilfunknetz das Heimat-Mobilfunknetz (HN) des Kommunikationsendgerätes (KEG) verwendet wird.

14. Verfahren nach einem der vorhergehenden Ansprüche,
**dadurch gekennzeichnet, dass**
- von dem Abrechnungssystem (CS) die Ortsinformation (BA) verglichen wird mit gespeicherten Ortsinformationen, welche verschiedenen Besucher-Mobilfunknetzen zugehörig sind, und
- bei einer Übereinstimmung der Ortsinformation (BA) mit einer der gespeicherten Ortsinformationen von dem Abrechnungssystem (CS) festgestellt wird, dass sich das Kommunikationsendgerät (KEG) in dem zugehörigen Besucher-Mobilfunknetz (VN) befindet.

15. Verfahren nach einem der vorhergehenden Ansprüche,
**dadurch gekennzeichnet, dass**
- als Ortsinformation eine Besucherregisteradresse (BA) zu dem Netzübergangsknoten (GGSN) übertragen wird, wobei die Besucherregisteradresse (BA) ein dem Kommunikationsendgerät temporär zugeordnetes Besucherregister (VLR) des Besucher-Mobilfunknetzes (VN) eindeutig identifiziert.

16. Verfahren nach einem der vorhergehenden Ansprüche,
**dadurch gekennzeichnet, dass**
- von einer dem Kommunikationsendgerät (KEG) temporär zugeordneten Vermittlungsstelle (SGSN) zusätzlich eine Kenngröße der Datenübertragung zu dem Abrechnungssystem (CS) übertragen wird und diese Kenngröße bei der Ermittlung des Abrechnungstarifs herangezogen wird.

17. Verfahren nach Anspruch 16,
**dadurch gekennzeichnet, dass**
- als Kenngröße der Datenübertragung eine Bandbreitenkenngröße der Luftschnittstelle des Kommunikationsendgerätes (KEG) zu dem Abrechnungssystem (CS) übertragen wird.

18. Verfahren nach einem der vorhergehenden Ansprüche,
**dadurch gekennzeichnet, dass**
- als Abrechnungssystem (CS) ein Dienstesteuerungspunkt (SCP) eines Intelligenten Netzes verwendet wird.

19. Verfahren nach einem der vorhergehenden Ansprüche,
**dadurch gekennzeichnet, dass**
- über die Datenverbindung die den aktuellen Aufenthaltsort des Kommunikationsendgeräts (KEG) betreffende Ortsinformation (BA) mittels der Nachricht AnyTimeInterrogationResult zu dem Abrechnungssystem (CS) übertragen wird.

20. Verfahren nach einem der Ansprüche 2 bis 18,
**dadurch gekennzeichnet, dass**
- über die Datenverbindung das Kennzeichen (K) mittels der Nachricht AnyTimeInterrogation von dem Abrechnungssystem (CS) zu dem zentralen Teilnehmerregister (HLR) übertragen wird.

## Claims

1. Method for ascertaining a billing tariff for billing for a packet switched data transfer (IP2), where a mobile communication terminal (KEG) which is involved in the data transfer and has access rights for a data mobile radio network (HN) is situated in a visitor mobile radio network (VN), in which
- a data link is set up between a billing system (CS), which performs billing for the data transfer, and a central subscriber register (HLR) in the data mobile radio network (HN),
- this data link is used to transfer an item of location information (BA), relating to the current location of the communication terminal (KEG), to the billing system (CS),
- the billing system (CS) uses the item of location information (BA) to establish that the communication terminal (KEG) is situated in the visitor mobile radio network (VN), and
- the billing system (CS) ascertains a billing tariff associated with the visitor mobile radio network (VN).

2. Method according to Claim 1,
**characterized in that**
- this data link is used to transfer an identifier (K) clearly identifying the mobile communication terminal (KEG) from the billing system (CS) to the central subscriber register (HLR), and
- the central subscriber register (HLR) then transfers the item of location information (BA) to the billing system (CS).

3. Method according to Claim 2,
**characterized in that**
- the identifier (K) is transferred from the billing system (CS) to the central subscriber register (HLR) just once at the start of the data transfer, and
- the billing system (CS) stores the subsequently transferred item of location information (BA) for the duration of the data transfer.

4. Method according to Claim 1,
**characterized in that**
- a change in the current location of the communication terminal (KEG) prompts the central subscriber register (HLR) to transfer the item of location information (BA) automatically to the billing system (CS).

5. Method according to Claim 4,
**characterized in that**
- the item of location information (BA) is stored in the billing system (CS) until the central subscriber register (HLR) transfers an updated item of location information to the billing system (CS).

6. Method according to one of Claims 2 to 5,
**characterized in that**
- setup of a data tunnel (PDP), used for transferring the data, from the communication terminal (KEG) to a network gateway node (GGSN) in the data mobile radio network (HN) involves the identifier (K) being transferred from a switching center (SSGN), which is temporarily associated with the communication terminal (KEG), in the visitor mobile radio network (VN) to the network gateway node (GGSN) in the data mobile radio network (HN), and
- the identifier (K) is transferred from this network gateway node (GGSN) to the billing system (CS).

7. Method according to Claim 6,
**characterized in that**
- the method is initiated by the visitor mobile radio network (VN) receiving a request message (1) from the communication terminal (KEG) which relates to the data transfer,
- a request is sent from the visitor mobile radio network (VN) to the central data store (HLR) regarding that data mobile radio network for which the communication terminal (KEG) has access rights, and
- the data tunnel (PDP) is then set up to the network gateway node (GGSN) in this data mobile radio network (HN).

8. Method according to Claim 6 or 7,
**characterized in that**
- the network gateway node (GGSN) transfers the identifier to an authentication server (AAA) in the data mobile radio network (HN) using an authentication message (7), and
- the authentication message is taken as a basis for transferring the identifier (K) to a service computer gateway (SSG).

9. Method according to Claim 8,
**characterized in that**
- the network gateway node (GGSN) transfers the identifier to the authentication server (AAA) via the service computer gateway (SSG),
- the transfer involves the service computer gateway (SSG) reading the identifier (K) from the authentication message (7), and
- the identifier (K) is stored in the service computer gateway (SSG).

10. Method according to Claim 8 or 9,
**characterized in that**
- the service computer gateway (SSG) monitors the data transfer (IP2), and
- monitoring information ascertained by the service computer gateway (SSG) and the identifier (K) are transferred (10) to the billing system (CS).

11. Method according to one of Claims 8 to 10,
**characterized in that**
- the network gateway node (GGSN) receives a user name and/or a password from the communication terminal (KEG), and
- the authentication message (7) is then transferred to the authentication server (AAA), the authentication message (7) containing the user name and/or the password.

12. Method according to Claim 11,
**characterized in that**
- the network gateway node (GGSN) receives from the communication terminal (KEG) a user name which serves merely as a dummy and/or a password which serves merely as a dummy.

13. Method according to one of the preceding claims,
**characterized in that**
- the data mobile radio network used is the home mobile radio network (HN) of the communication terminal (KEG).

14. Method according to one of the preceding claims,
**characterized in that**
- the billing system (CS) compares the item of location information (BA) with stored location information associated with various visitor mobile radio networks, and
- a match between the item of location information (BA) and one of the stored items of location information prompts the billing system (CS) to establish that the communication terminal (KEG) is situated in the associated visitor mobile radio network (VN).

15. Method according to one of the preceding claims,
**characterized in that**
- the item of location information transferred to the network gateway node (GGSN) is a visitor location register address (BA), with the visitor location register address (BA) clearly identifying a visitor location register (VLR), which is temporarily associated with the communication terminal, in the visitor mobile radio network (VN).

16. Method according to one of the preceding claims,
**characterized in that**
- a switching center (SGSN) which is temporarily associated with the communication terminal (KEG) additionally transfers a parameter for the data transfer to the billing system (CS), and this parameter is used when ascertaining the billing tariff.

17. Method according to Claim 16,
**characterized in that**
- the parameter for the data transfer which is transferred to the billing system (CS) is a bandwidth parameter for the air interface of the communication terminal (KEG).

18. Method according to one of the preceding claims,
**characterized in that**
- the billing system (CS) used is a service control point (SCP) in an intelligent network.

19. Method according to one of the preceding claims,
**characterized in that**
- the data link is used to transfer to the billing system (CS) the item of location information (BA) which relates to the current location of the communication terminal (KEG) using the message AnyTimeInterrogationResult.

20. Method according to one of Claims 2 to 18,
**characterized in that**
- the data link is used to transfer the identifier (K) from the billing system (CS) to the central subscriber register (HLR) using the message AnyTimeInterrogation.

## Revendications

1. Procédé de détermination d'un tarif de facturation pour facturer une transmission de données à commutation par paquets (IP2), dans lequel un terminal de communication mobile (KEG) participant à la transmission de données et ayant des droits d'accès à un réseau de radiocommunication mobile de données (HN) se trouve dans un réseau de radiocommunication mobile visité (VN) et dans lequel
- on établit une liaison de données entre un système de facturation (CS) qui effectue une facturation de la transmission de données et un enregistreur central d'abonnés (HLR) du réseau de radiocommunication mobile de données (HN),
- par l'intermédiaire de cette liaison de données, on transmet au système de facturation (CS) une information de localisation (BA) concernant le lieu de séjour actuel du terminal de communication (KEG),
- on constate au moyen du système de facturation (CS) à l'aide de l'information de localisation (BA) que le terminal de communication (KEG) se trouve dans le réseau de radiocommunication mobile visité (VN), et
- on détermine au moyen du système de facturation (CS) un tarif de facturation associé au réseau de radiocommunication mobile visité (VN).

2. Procédé selon la revendication 1,
**caractérisé par le fait que**
- par l'intermédiaire de cette liaison de données, un identificateur (K) identifiant sans équivoque le terminal de communication mobile (KEG) est transmis du système de facturation (CS) à l'enregistreur central d'abonnés (HLR), et
- l'information de localisation (BA) est transmise par l'enregistreur central d'abonnés (HLR) au système de facturation (CS).

3. Procédé selon la revendication 2,
**caractérisé par le fait que**
- l'identificateur (K) est transmis une seule fois au début de la transmission de données par le système de facturation (CS) à l'enregistreur central d'abonnés (HLR), et
- l'information de localisation (BA) transmise ensuite est mémorisée par le système de facturation (CS) pour toute la durée de la transmission de données.

4. Procédé selon la revendication 1,
**caractérisé par le fait que**
- suite à un changement du lieu de séjour actuel du terminal de communication (KEG), l'information de localisation (BA) est transmise automatiquement par l'enregistreur central d'abonnés (HLR) au système de facturation (CS).

5. Procédé selon la revendication 4,
**caractérisé par le fait que**
- l'information de localisation (BA) est mémorisée dans le système de facturation (CS) jusqu'à ce qu'une information de localisation actualisée soit transmise par l'enregistreur central d'abonnés (HLR) au système de facturation (CS).

6. Procédé selon l'une des revendications 2 à 5,
**caractérisé par le fait que**
- lors d'un établissement d'un tunnel de données (PDP) servant à la transmission des données et allant du terminal de communication (KEG) à une passerelle interréseau (GGSN) du réseau de radiocommunication mobile de données (HN), l'identificateur (K) est transmis par un central de commutation (SSGN), temporairement associé au terminal de communication (KEG), du réseau de radiocommunication mobile visité (VN) à la passerelle interréseau (GGSN) du réseau de radiocommunication mobile de données (HN), et
- l'identificateur (K) est transmis par cette passerelle interréseau (GGSN) au système de facturation (CS).

7. Procédé selon la revendication 6,
**caractérisé par le fait que**
- en préliminaire au procédé, le réseau de radiocommunication mobile visité (VN) reçoit un message de demande (1), concernant la transmission de données, du terminal de communication (KEG),
- le réseau de radiocommunication mobile visité (VN) interroge la mémoire de données centrale (HLR) pour savoir pour quel réseau de radiocommunication mobile de données le terminal de communication (KEG) a des droits d'accès, et
- le tunnel de données (PDP) est établi vers cette passerelle interréseau (GGSN) de ce réseau de radiocommunication mobile de données (HN).

8. Procédé selon la revendication 6 ou 7,
**caractérisé par le fait que**
- l'identificateur est transmis au moyen d'un message d'authentification (7) par la passerelle interréseau (GGSN) à un serveur d'authentification (AAA) du réseau de radiocommunication mobile de données (HN), et
- sur la base du message d'authentification, l'identificateur (K) est transmis à une passerelle de sélection de service (SSG).

9. Procédé selon la revendication 8,
**caractérisé par le fait que**
- l'identificateur est transmis par la passerelle interréseau (GGSN) par l'intermédiaire de la passerelle de sélection de service (SSG) au serveur d'authentification (AAA),
- lors de la transmission par la passerelle de sélection de service (SSG), l'identificateur (K) est lu dans le message d'authentification (7), et
- l'identificateur (K) est mémorisé dans la passerelle de sélection de service (SSG).

10. Procédé selon la revendication 8 ou 9,
**caractérisé par le fait que**
- la transmission de données (IP2) est surveillée par la passerelle de sélection de service (SSG), et
- des informations de surveillance déterminées par la passerelle de sélection de service (SSG) et l'identificateur (K) sont transmis (10) au système de facturation (CS).

11. Procédé selon l'une des revendications 8 à 10,
**caractérisé par le fait que**
- la passerelle interréseau (GGSN) reçoit un nom d'utilisateur et/ou un mot de passe du terminal de communication (KEG), et
- le message d'authentification (7) est transmis au serveur d'authentification (AAA), le message d'authentification (7) contenant le nom d'utilisateur et/ou le mot de passe.

12. Procédé selon la revendication 11,
**caractérisé par le fait que**
- la passerelle interréseau (GGSN) reçoit du terminal de communication (KEG) un nom d'utilisateur servant simplement de réservation de place et/ou un mot de passe servant simplement de réservation de place.

13. Procédé selon l'une des revendications précédentes,
**caractérisé par le fait que**
- l'on utilise comme réseau de radiocommunication mobile de données le réseau de radiocommunication mobile nominal (HN) du terminal de communication (KEG).

14. Procédé selon l'une des revendications précédentes,
**caractérisé par le fait que**
- le système de facturation (CS) compare l'information de localisation (BA) à des informations de localisation mémorisées qui sont associées à différents réseaux de radiocommunication mobile visités, et
- si l'information de localisation (BA) coïncide avec l'une des informations de localisation mémorisées, le système de facturation (CS) constate que le terminal de communication (KEG) se trouve dans le réseau de radiocommunication mobile visité (VN) associé.

15. Procédé selon l'une des revendications précédentes,
**caractérisé par le fait que**
- une adresse d'enregistreur visité (BA) est transmise comme information de localisation à la passerelle interréseau (GGSN), l'adresse d'enregistreur visité (BA) identifiant sans équivoque un enregistreur visité (VLR), temporairement associé au terminal de communication, du réseau de radiocommunication mobile visité (VN).

16. Procédé selon l'une des revendications précédentes,
**caractérisé par le fait que**
- une grandeur caractéristique de la transmission de données est transmise en plus au système de facturation (CS) par un central de commutation (SGSN) temporairement associé au terminal de communication (KEG) et que cette grandeur caractéristique est exploitée lors de la détermination du tarif de facturation.

17. Procédé selon la revendication 16,
**caractérisé par le fait que**
- comme grandeur caractéristique de la transmission de données, une grandeur caractéristique de largeur de bande de l'interface radio du terminal de communication (KEG) est transmise au système de facturation (CS).

18. Procédé selon l'une des revendications précédentes,
**caractérisé par le fait que**
- un point de contrôle de service (SCP) d'un réseau intelligent est utilisé comme système de facturation (CS).

19. Procédé selon l'une des revendications précédentes,
**caractérisé par le fait que**
- l'information de localisation (BA) concernant le lieu de séjour actuel du terminal de communication (KEG) est transmise au système de facturation (CS) par l'intermédiaire de la liaison de données au moyen du message appelé AnyTimeInterrogationResult.

20. Procédé selon l'une des revendications 2 à 18,
**caractérisé par le fait que**
- l'identificateur (K) est transmis par le système de facturation (CS) à l'enregistreur central d'abonnés (HLR) par l'intermédiaire de la liaison de données au moyen du message appelé AnyTimeInterrogation.
